# EUROPÄISCHE PATENTSCHRIFT

(11) **EP 0 781 189 B1**
(45) Veröffentlichungstag und Bekanntmachung des Hinweises auf die Patenterteilung: **21.10.1998**
(21) Anmeldenummer: 95929068.5
(22) Anmeldetag: 03.08.1995
(51) Int. Cl.: B26D 9/00

(54) **VORRICHTUNG ZUM TRENNEN VON FLIESSMITTELPACKUNGEN**
DEVICE FOR SEPARATING FLUID PACKAGES
DISPOSITIF DE SEPARATION D'EMBALLAGES DE FLUIDES

(30) Priorität: 13.09.1994 DE 4432511
(43) Veröffentlichungstag der Anmeldung: 02.07.1997
(73) Patentinhaber: Tetra Laval Holdings & Finance SA, 1009 Pully (CH)
(72) Erfinder: KORUS, Bernhard, D-64289 Darmstadt (DE); PUSCH, Gottfried, D-64319 Pfungstadt (DE); BUB, Heiko, D-55294 Bodenheim (DE); REIL, Wilhelm, D-64625 Bensheim (DE)
(74) Vertreter: Weber, Dieter, Dr.
(86) Internationale Anmeldenummer: EP9503087
(87) Internationale Veröffentlichungsnummer: WO9608349

(56) Entgegenhaltungen:
- DE-A- 3 925 472
- FR-A- 2 489 741
- GB-A- 2 194 431
- US-A- 3 429 211

## Beschreibung

Die Erfindung betrifft eine Vorrichtung zum mechanischen Trennen von im Trennbereich Kunststoff aufweisenden Werkstücken, insbesondere im Kopfbereich paarweise miteinander verbundenen Fließmittelpackungen, mit Zu- und Abfördereinrichtungen mit Führungsschienen und Mitnehmern und mit an der Förderbahn angeordneten Trennmessern.

Zum mechanischen Trennen von Werkstücken, insbesondere aus Kunststoff tiefgezogenen Fließmittelpackungen, ist bereits vorgeschlagen worden, ein etwa 10 m langes und an einer Kante eine Schneidklinge aufweisendes Band zu verwenden, welches von einer Rolle durch die Schnittstelle zu einer anderen Rolle bewegt wird, während die frisch hergestellten Fließmittelpackungen quer zur Laufrichtung dieses Trennbandes gefördert werden. Es hat sich im Verlaufe von Versuchen dabei gezeigt, daß es sehr schwierig ist, mehrere Packungen in einem Arbeitsgang durchzutrennen, wobei es zwar möglich war, das mit Zähnen versehene Trennband zum Durchsägen zu verwenden, hierbei und erst recht bei der Verwendung einer glatten Klinge ohne Zähne das Abtrennen aber besonders dann schwierig wurde, wenn nicht eine gerade Verbindungsnaht oder dergleichen durchzusägen bzw. durchzuschneiden war, sondern wenn gleichzeitig auch andere Konturen mitgetrennt werden sollten, z.B. mitten durch eine Öffnungsvorrichtung geschnitten werden sollte. Problematisch war die genaue Führung des dünnen Trennbandes entlang der Schneidebene. Zwar hatte man das Problem des guten Führens des Trennbandes erkannt und Führungswangen vorgesehen, diese aber mußten beweglich angeordnet und aufwendig aufgebaut sein und konnten nicht einmal dann das Trennband während seiner labilen Bewegungen auf dem langen Weg zwischen den beiden Vorratsrollen an den richtigen Stellen und fortlaufend ohne Unterbrechung unter präziser Führung halten.

Aufgabe der Erfindung ist es, eine Vorrichtung der vorstehend genannten Art zu schaffen, mit welcher ein stark unterschiedlich konturierter Kunststoffkörper präzise von einem entsprechenden Gegenkörper aus Kunststoff entlang einer möglichst glatten Trennfläche und weitgehend ohne Deformationen der Kunststoffkörper separiert werden kann.

Diese Aufgabe wird in der eingangsgenannten vorrichtung erfindungsgemäß dadurch gelöst, daß in Förderrichtung des Werkstückes einem ersten Linearmesser mit paarweise symmetrisch zu einer Symmetrieebene angeordneten Messern mit jeweils gerader Schneidklinge ein Rundmesser mit paarweise symmetrisch zu der Symmetrieebene angeordneten, drehbaren Kreismessern nachgeschaltet ist, daß sich die Messer mit jeweils gerader Schneidklinge in der senkrecht zur Symmetrieebene liegenden Schneidebene befinden und die geraden Schneidklingen unter einem Winkel gegen die Symmetrieebene so angestellt sind, daß sich die Schneidklingen in Förderrichtung einander derart nähern, daß dazwischen im wesentlichen nur noch das durch das Rundmesser trennbare Kunststoffmaterial ohne Schneideingriff in Förderrichtung durchtreten kann. Bei der erfindungsgemäßen Vorrichtung hat man also ein Linearmesser mit einem Rundmesser kombiniert und teilt sozusagen die Trennaufgaben hierdurch auf. Das Linearmesser sorgt für das Trennen all jener Flächen, die sich außerhalb der Symmetrieebene befinden, während das Rundmesser dort schneidet, wo Kunststoffteile sich in der Symmetrieebene oder dicht neben dieser befinden.

Zwar kann die erfindungsgemäße Vorrichtung überall dort eingesetzt werden, wo Werkstücke in demjenigen Bereich Kunststoff aufweisen, in welchem sie voneinander getrennt werden sollen, zur besseren Veranschaulichung wird hier aber von Fließmittelpackungen gesprochen und die erfindungsgemäße Vorrichtung in Verbindung mit deren Bearbeitung beschrieben, obgleich die Erfindung auf Packungen selbstverständlich nicht beschränkt ist. Bei den hier konkret beschriebenen Fließmittelpackungen handelt es sich um solche, die ganz aus tiefziehfähigem Kunststoff geformt sind und aus zwei Hälften bestehen, die entlang einer gemeinsamen Flansch- oder Verbindungsnaht zur Bildung des Packungshohlraumes versiegelt sind. Es gibt Flüssigkeitspackungen dieser Art, bei denen die Ausgießöffnung sich im Bereich der Verbindungsnaht befindet. Legt man eine gedachte Ebene durch die Flansch- bzw. Verbindungsnaht, welche vorzugsweise eine Siegelnaht ist, und blickt man in Richtung dieser Ebene, die für das Verständnis der vorliegenden Erfindung in der Symmetrieebene liegt, dann befindet sich die Ausgießöffnung zwischen den geraden Abschnitten der Verbindungsnaht in Form eines kreisrunden Bundes, der beispielsweise außen ein Gewinde tragen kann, so daß man durch Aufschrauben einer Gewindekappe die spätere Packung nach dem Füllen verschließen kann. Bei der Betrachtung in Richtung der Symmetrieebene blickt man z.B. auf den Oberboden einer Packung und sieht dort in der Projektion die geradlinige Verbindungsnaht, die an einer Stelle durch den kreisförmigen Bund der Ausgießöffnung unterbrochen ist.

Man kann sich vorstellen, daß eine geradlinige Verbindungsnaht aus Kunststoff ohne die Unterbrechung durch den kreisförmigen Bund verhältnismäßig einfach zu durchschneiden wäre, wobei die runden oder geraden Schneidemesser in einer Schneidebene liegen, welche die erwähnte Symmetrieebene entlang der Schneidlinie schneidet.

Die Schwierigkeit beim Durchtrennen der erwähnten Verbindungsnaht liegt in der Kombination des geradlinigen Teils der Verbindungsnaht einerseits und des runden oder anderweitig konturierten Teils der Verbindungsnaht andererseits, bei der betrachteten Fließmittelpackung den kreisförmigen Teilen des Bundes der Ausgießöffnung. Es hat sich nämlich gezeigt, daß man ohne Deformation des Bundes die Messer für den geraden Schnitt durch die gerade Verbindungsnaht nicht verwenden kann.

Verwendet man aber ein Linearmesser gleichzeitig zu einem Rundmesser, wie erfindungsgemäß vorgeschlagen, dann kann man Werkstücke entlang unterschiedlich konturierten Verbindungsnähten durchschneiden. Besonders günstig wirkt dabei die paarweise Anordnung sowohl des Rundmessers einerseits, bei welchem zwei Kreismesser zusammenwirken, als auch des Linearmessers andererseits, bei welchem eine gerade Schneidklinge paarweise einer gegenüberliegenden Schneidklinge so zugeordnet ist, daß beide Messer zwar in der Schneidebene liegen, die beiden durch die Klingen gelegten Geraden aber einander schneiden, und zwar in Förderrichtung hinter dem Linearmesser. Die Symmetrieebene erkennt man zwischen den beiden Messern mit jeweils gerader Schneidklinge als Linie, und jede durch die Schneidklinge gelegte Gerade des jeweiligen Messers ist gegen die in der Projektion als Linie erscheinende Symmetrieebene unter einem Winkel zwischen 0° und 90° angestellt.

Ein solches Linearmesser hat sich als überraschend vorteilhaft beim Durchschneiden derjenigen Teile des Werkstückes aus Kunststoff erwiesen, die sich außerhalb der Symmetrieebene befinden, bei der hier betrachteten speziellen Ausführungsform also der beiden oberhalb und unterhalb der Symmetrieebene zu durchschneidenden halbkreisförmigen Bünde, die an den Enden, wo sie ineinanderübergehen, an die geradlinige Verbindungsnaht stoßen. Das Rundmesser seinerseits zeigt in überraschender Weise gute Schneideigenschaften im geradlinigen Bereich der Verbindungsnaht und kann den bogenförmig oder anderweitig konturierten Bereich der zu schneidenden Kunststoffwandung dann nicht mehr deformieren, wenn dieser Bereich bereits durch das Linearmesser durchgeschnitten ist.

Auf diese Weise können auch stark unterschiedlich konturierte Kunststoffkörper präzise mechanisch voneinander separiert werden. Die eine Kontur ist die z.B. doppelt gelegte gerade Verbindungsnaht entlang eines gemeinsamen Verbindungsflansches zweier miteinander verbundener Halbschalen aus Kunststoff. Die andere von der letzterwähnten stark unterschiedlich ausgestaltete Kontur ist im Bereich des Oberbodens die Ausgießöffnung, d.h. der zylindermantelförmige Bund der Ausgießvorrichtung, welcher in Draufsicht als kreisrunder Bund erscheint. Die beiden Teile des Linearmessers greifen in die beiden halbkreisförmigen Bünde ein und trennen diese durch. Als allgemeinen Begriff könnte man von dem "gebogenen Teil" der Kontur sprechen, während das Rundmesser in den geraden Teil der Kontur des Kunststoffteiles eingreift, hier also in die Verbindungsnaht. Beide Trennvorgänge erfolgen ohne Deformation des zu bearbeitenden Kunststoffkörpers, was gerade bei der Ausgießvorrichtung einer Fließmittelpackung von entscheidender Bedeutung sein kann. Schlechte Trennflächen bereiten dem Packungshersteller nämlich Schwierigkeiten beim flüssigkeitsdichten Verschließen von Ausgießvorrichtungen. Diese Probleme werden durch die erfindungsgemäßen Maßnahmen vermieden.

Vorteilhaft ist es gemäß der Erfindung weiterhin, wenn in Förderrichtung des Werkstückes ein zweites Linearmesser als Vormesser vorgeordnet ist, dessen gerade Schneidklingen in einem kleineren Winkel als die geraden Schneidklingen des ersten Linearmessers gegen die Symmetrieebene angestellt sind. Will man zwei Kunststoffteile, z.B. zwei durch Tiefziehen geformte Kunststoffpackungen voneinander trennen, die in ihrem Kopfbereich - Kopf gegen Kopf - miteinander verbunden waren, so ist gerade der erste Anschnitt bei einer Trennvorrichtung der eingangs beschriebenen Art das größte Problem. Es ist daher günstig, wenn gemäß der vorstehenden Maßnahme das Separieren oder Durchschneiden des "gebogenen Teiles" der Kontur nicht nur durch ein Linearmesser sondern aufgeteilt durch zwei unterschiedliche Linearmesser erfolgt. Das zweite Linearmesser unterscheidet sich dabei von dem ersten, daß es zuerst eingreift und den Anschnitt vornimmt, vorzugsweise sogar nur die Oberfläche an der gebogenen Stelle soweit anritzt oder anschneidet, daß das nachgeschaltete erste Linearmesser den Anschnitt nur noch fortzusetzen hat und dadurch das Trennen ohne Deformieren der gebogenen Kontur zuendeführen kann. Für das Durchschneiden der gesamten gebogenen Kontur muß das erste Linearmesser mit seinen geraden Klingen in der oben beschriebenen Weise gegen die Symmetrieebene unter einem Winkel zwischen 0° und 90° angestellt sein. Für das Einleiten des schwierigen Anschnittes hingegen ist es zweckmäßig, wenn das zweite Linearmesser seine Schneidklingen unter einem geringeren Winkel angestellt hat als das erste Linearmesser. Dadurch wird sichergestellt, daß der Anschnitt nicht zu weit in die gebogene Kontur hineingetrieben wird, daß es vorzugsweise nur bei einem Anritzen der Oberfläche und Vorgeben der Trennlinie bleibt.

Es ist erfindungsgemäß weiterhin zweckmäßig, wenn die geraden Schneidklingen des ersten Linearmessers als Hauptmesser unter einem Winkel von 1° bis 20°, vorzugsweise von 5° bis 15°, gegen die Symmetrieebene angestellt sind und daß die geraden Schneidklingen des zweiten Linearmessers als Vormesser unter einem Winkel von 0,5° bis 10°, vorzugsweise 1° bis 5° gegen die Symmetrieebene angestellt sind. Versuche haben gezeigt, daß ein Anstellen der Schneidklingen des zweiten Linearmessers als Vormesser von z.B. 3° sehr gute Ergebnisse beim Einleiten des Anschnittes gezeigt hat und daß die gesamte gebogene Kontur, z.B. der obere und untere halbe Kreisbund der Öffnungsvorrichtung des einen Werkstückes von denen des anderen Werkstückes ganz abgetrennt werden konnten, wenn die Klingen des ersten Linearmessers unter 8° zur Symmetrieebene angestellt waren. Geringfügige Deformationen des aus Kunststoff hergestellten Werkstückes während des Trennvorganges sind unschädlich und beeinträchtigen einen präzise gesetzten Schnitt nicht, sofern die Beanspruchung und Deformierung in tolerierbaren Grenzen bleibt. Die Praxis hat gezeigt, daß die Grenzen hier allerdings sehr eng gezogen sind und daß der Fachmann bei normalen Fließmittelpackungen nur die Lehre nach den vorstehenden Merkmalen anzuwenden braucht, um erfolgreiche Trennlinien zu gewährleisten.

Bei weiterer vorteilhafter Ausgestaltung der Erfindung sind das Linearmesser und das Grundmesser in paarweise bzgl. der Symmetrieebene im Abstand voneinander angebrachten Messerführungen angeordnet, wobei vorzugsweise die in Förderrichtung hinteren Enden des zweiten Linearmessers im Bereich der Vorderkanten des ersten Linearmessers liegen, die beiden Kreismesser überlappen einander in der Schneidebene, und der Überlappungsbereich ist in einem Abstand kleiner als die Länge, vorzugsweise die halbe Länge der geraden Schneidklinge des ersten Linearmessers vom abstromseitigen Ende des ersten Linearmessers angeordnet. Einfach ausgedrückt schließt sich das erste Linearmesser dem zweiten direkt an, so daß das Werkstück im Bereich der gerade zu trennenden, gebogenen Kontur bereits in Eingriff mit dem ersten Linearmesser kommt, wenn andere Teile dieser gebogenen Kontur von dem zweiten Linearmesser soeben noch gehalten werden. Man versteht, daß dadurch die Schnittlinie von der einen Station an die nächste übergeben wird, so daß das erste Linearmesser nicht erneut ansetzen oder die Trennlinie neu suchen muß.

Ähnlich verhält es sich mit den beiden Kreismessern, die einander an der Schneidebene überlappen, d.h. im Schneidbereich, wo die Schneidebene die Symmetrieebene kreuzt. Durch die Überlappung zweier Kreismesser im Schneidbereich werden mit Vorteil Scherkräfte erzeugt, die für ein sauberes Trennen einer geraden Schneidnaht sorgen.

Auch die letzte Maßnahme, daß der Überlappungsbereich der beiden Kreismesser in einem bestimmten Abstand von dem benachbarten Linearmesser sein soll, dient dem Vorteil, daß die Kreismesser nicht eine vollständig neue Schnittlinie am Werkstück suchen müssen sondern sozusagen ein von dem ersten Linearmesser geführtes Werkstück finden, so daß der Schnitt auch beim erstmaligen Eingreifen der Kreismesser in das Werkstück präzise gefunden wird. Bei dem abstromigen Ende des ersten Linearmessers handelt es sich mit anderen Worten auch um das oben erwähnte in Förderrichtung gesehen hintere Ende des Linearmessers. Durch das winkelige Anstellen der Klingen des Linearmessers stehen diese dicht beieinander und bieten eine gute Führung für das Werkstück, wenn es sich zum ersten Mal vorn dem Eingriff der Kreismesser nähert. Im weiteren Verlauf ist der Trennvorgang ohnehin weniger problematisch, wenn mehrere Werkstücke in einem Strang hintereinanderliegend durch die Trennvorrichtung gemäß der Erfindung geführt werden. Aber auch beim einzelnen Einführen eines Werkstückes ist das Trennen ohne Deformation und mit guten Schneidkanten durch die Erfindung gewährleistet.

Zweckmäßig ist es erfindungsgemäß ferner, wenn die beiden Kreismesser frei drehend und von den Werkstücken antreibbar gelagert und mit rasierklingenartig dünnen, vorzugsweise mit einer Klingendicke von 0,5 bis 2 mm, besonders bevorzugt von 1 bis 1,5 mm, glatten Klingen versehen sind, und wenn der Durchmesser jedes Kreismessers etwa ein halb bis drei Viertel der Länge der geraden Klinge des ersten Linearmessers beträgt. Die Vorrichtung ist besonders dadurch vereinfacht und betrieblich zuverlässig, daß die Kreismesser nicht gesondert angetrieben sein müssen. Vielmehr drehen die Werkstücke beim Hindurchführen durch die beiden Kreismesser letztere in der stets passenden Geschwindigkeit. Die Werkstücke erfahren dann durch die rasierklingenartig dünnen Kreismesser saubere Schnitte, und durch die glatte Ausgestaltung der Schneidklingen wird auch nicht Staub oder Kunststoffgranulat erzeugt, das in unerwünschter Weise in die Maschine oder gar in das Innere einer Fließmittelpackung gelangt. Die Länge der geraden Klinge des Linearmessers ist auf den Durchmesser des Kreismessers so abgestimmt, daß das erste Linearmesser immer noch zwischen zwei im Bereich der gewölbten Kontur geschnittenen Werkstücken steckt, wenn das Rundmesser mit dem Trennvorgang beginnt. Der durch das Linearmesser erzeugte Schlitz wird durch diese Abstimmung der Durchmesser und der Länge der Messer offengehalten, wodurch die Werkstücke vom ersten bis zum letzten Trennen präzise gehalten und ausgerichtet verbleiben.

Mit Vorteil ist erfindungsgemäß ferner jede Messerführung leistenförmig ausgestaltet und weist auf der der Symmetrieebene zugewandten Seite eine Zentrierleiste geringerer Höhe als die der Messerführung auf. Die Leistenform bietet dem Maschinenbauer gute Montagemöglichkeiten und insbesondere die Anordnung mehrerer Messer im Bereich des länglichen Förderweges der Werkstücke. Die Symmetrieebene liegt mittig zwischen den leistenförmigen Messerführungen, die auf der dem Schnitt zugewandten Seite entsprechend so ausgestaltet sein können, daß nicht nur die Messer geführt werden, sondern auch die Werkstücke. Im Falle von Fließmittelpackungen kann die Zentrierleiste vorn an der Messerführung von beiden Seiten keilförmig bis nahe an die Trennstelle heranreichen, wodurch nicht nur die jeweilige Packung sondern auch das Messer bis nahe an die Bearbeitungsstelle geführt wird. Die Präzision einer solchen Trennvorrichtung wird dadurch ersichtlich optimal.

Wenn weiterhin erfindungsgemäß das zweite Linearmesser gerade Klingen mit Wellenschliff, Zahnkontur oder dergleichen hat, wird das erste Anschneiden oder Anritzen der äußeren Oberfläche des Werkstückes erleichtert, ohne daß ein großes Risiko besteht, Rückstände, wie z.B. Späne in das Innere von Packungen zu befördern. Die zu trennende gewölbte Kontur ist an der Stelle des ersten Anschnittes entweder geschlossen, so daß mit Sicherheit Rückstände nicht in das Packungsinnere fallen können, oder das erste Durchstechen erfolgt erst im letzten Augenblick, wo praktisch keine wesentlichen Rückstände mehr erzeugt werden. Das gerade Messer greift beim ersten Anschnitt auch praktisch nur im Tangentenbereich an und befördert etwa erzeugte Späne sogleich tangential nach außen weg. Durch den flachen Anstellwinkel wird das Linearmesser leicht und präzise an die richtige Stelle für das Anritzen herangeführt.

Zweckmäßig ist es gemäß der Erfindung auch, wenn jede Messerführung aus zwei etwa deckungsgleich aufeinanderlegbaren Teilen besteht und das Kreismesser auf der der Symmetrieebene abgewandten Außenseite abgedeckt ist. Die Montage einer solchen Messerführung ist bequem und erlaubt gegebenenfalls ein leichtes Umrüsten der Trennvorrichtung, da unterschiedliche Linearmesser und gegebenenfalls auch Kreismesser unterschiedlichen Durchmessers an verschiedenen Stellen bezüglich der Schneidlinie angesetzt werden. Im Falle von Packungen unterschiedlicher Ausgießöffnungen, insbesondere unterschiedlicher Gestaltungen der gekrümmten Konturen, können die Messerführungen, die auch als Werkstückführung dienen, anders aufgebaut sein und entsprechend leicht ausgetauscht werden. In Anpassung an die Durchmesser der Kreismesser wird die Messerführung mehr oder weniger breit sein, damit das Kreismesser auf der Außenseite abgedeckt bleibt, also ein einwandfreier Schutz für das Bedienungspersonal gewährleistet ist.

Günstig ist es auch, wenn erfindungsgemäß die Messerführungen und Messer im Bewegungs- und Wirkbereich einer ersten Zufördereinrichtung angeordnet sind. Die Relativbewegungen zwischen den Messern und den Werkstücken erfolgt dann durch die Antriebe dieser Zufördereinrichtung mit der Folge, daß die Maschinenstation mit der Trennvorrichtung besonders einfach ausgestaltet bleiben kann. Gleichwohl ist der Abtrennvorgang exakt synchron zur Bewegung der Werkstücke eingerichtet.

Die Trennvorrichtung gemäß der Erfindung erlaubt also das Separieren auch stark unterschiedlich konturierter Kunststoffkörper mit geringem Aufbau und einfacher Technik. Das Separieren erfolgt präzise entlang einer Linie, ohne daß Teile des Kunststoffkörpers deformiert werden, auch wenn die Trennlinie nicht nur eine Gerade ist sondern auch gebogene Konturen hat. Wenn außerdem die hauptsächlich durch die Kunststoffelder hindurchdringenden Messer ohne Zähne und ohne Wellenschliff ausgestaltet sind, d.h. eine glatte Klinge wie ein Rasiermesser haben, dann ergeben sich auch glatte Trennflächen, die insbesondere an den Ausgießvorrichtungen von Flüssigkeitspackungen vorteilhaft sind, denn zumeist wird gerade entlang der kreisförmigen Endkante des Bundes einer Ausgießöffnung eine Dichtung durch Gegendrücken einer Schraubkappe oder dergleichen gewünscht. Die Verwendung der glatten Messer vermeidet außerdem mit Vorteil das Entstehen von Rückständen, wie z.B. Staub oder Späne des Kunststoffmateriales.

Das Aufteilen der Linearmesser in ein erstes, einem zweiten Linearmesser nachgeschalteten Messer stellt sicher, daß an exakt der gewünschten, richtigen Stelle das erste Anschneiden oder Anritzen erfolgt und das nachgeschaltete Linearmesser ein Durchschneiden der gewölbten Kontur gestattet, derart, daß dann nur noch die gerade, ungetrennte Flanschnaht dem Rundmesser zugeführt wird. Vor dem Eingriff des Rundmessers mit dieser geraden Flanschnaht ist letztere von Einschnitten noch vollständig unberührt und geschlossen. Gleichwohl sind die Größen und die Anordnung der Kreismesser derart auf die vorher angeordneten Linearmesser ausgerichtet und so angepaßt, daß eine Führung der Werkstücke von den Linearmessern für ein exaktes Einschneiden und insbesondere Weiterschneiden im Bereich des Rundmessers sichergestellt ist. Durch die erfindungsgemäße Vorrichtung erfolgt ein exakter Schnitt in einer Linie, in welcher eine Station nach der anderen eingreift.

Während Deformierungen im Bereich der Öffnungsvorrichtung einer Packung zu Funktionsstörungen im weiteren Herstellungsbetrieb der Packung führen würden, können solche Deformierungen durch die beschriebenen Maßnahmen erfindungsgemäß vermieden werden. Damit können nachgeschaltete Schweißvorgänge, Schraubvorgänge und dergleichen mit geringen Toleranzen vorgenommen werden, so daß sich Packungen hoher Qualität ergeben. Durch die günstige Anordnung sowohl der geraden wie auch der runden Messer wird dafür gesorgt, daß erfindungsgemäß beim Schneiden der Widerstand fast Null ist mit der Folge der glatten Trennflächen, die außerdem nicht deformiert sind. Die Dreiteilung des Trennvorganges ist einer der Gründe, daß beim Schneiden der Widerstand am Werkstück sehr gering ist, sogar an der Stelle des ersten Anschnittes, wo im allgemeinen die höchste Kraft am Werkstück punktartig angreift. Die Aufteilung des Trennvorganges in mehrere Stationen führt auch dazu, daß mit Vorteil die Werkstücke keinen längeren Weg ungeführt durchlaufen müssen. Durch das Eingreifen der Messer in zuvor im Werkstück gelegten Schlitze kann man exakte Relativpositionen zum Schnitt erhalten, welcher damit gut und präzise an der richtigen Stelle geführt werden kann.

Weitere Vorteile, Merkmale und Anwendungsmöglichkeiten der vorliegenden Erfindung ergeben sich aus der folgenden Beschreibung eines bevorzugten Ausführungsbeispieles in Verbindung mit den anliegenden Zeichnungen. Es zeigen:
- Figur 1: perspektivisch eine durch Tiefziehen aus Kunststoffmaterial hergestellte Fließmittelpackung,
- Figur 2: eine Reihe von paarweise Kopf an Kopf miteinander verbundenen Packungen der in Figur 1 gezeigten Art,
- Figur 3: eine Trennvorrichtung mit verschiedenen Zufördereinrichtungen und nicht näher dargestellten Abfördermitteln im rechten Teil der Zeichnung,
- Figur 4: herausgezeichnet und vergrößert die eigentliche Trennvorrichtung aus der oberen Mitte der Figur 3 und
- Figur 5: eine Querschnittsansicht entlang der Linie V'- V der Figur 4.

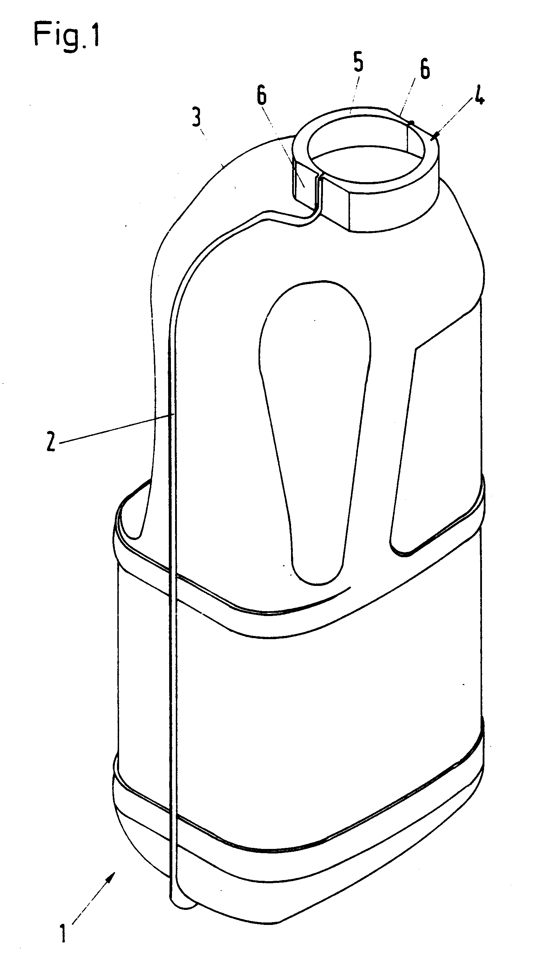

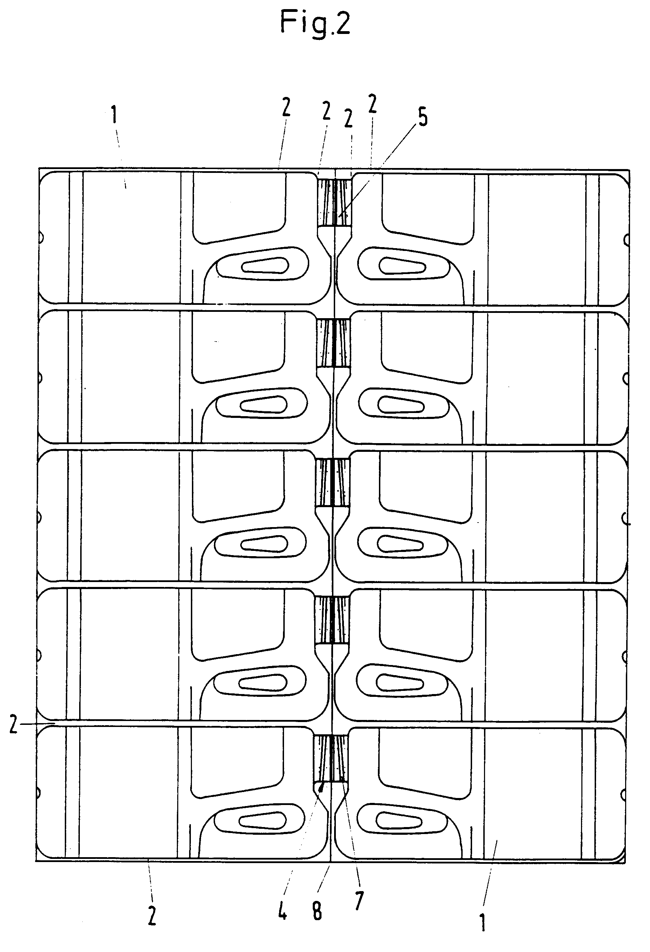

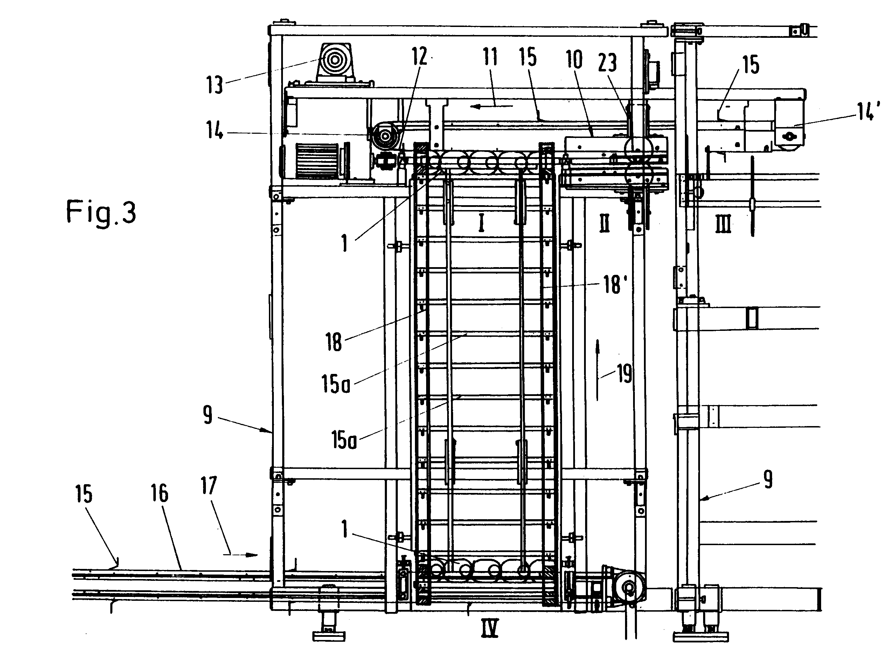

In Figur 1 ist perspektivisch eine Fließmittelpackung 1 gezeigt, welche durch Tiefziehen zweier Halbschalen aus Kunststoffmaterial und Versiegeln längs der Flansch- bzw. Verbindungsnaht 2 hergestellt ist. Aus der etwas dickeren Linie der Figur 1 ist zu schließen, daß die Verbindungsnaht 2 aus den zwei Flanschnähten der jeweiligen Halbschale durch Versiegeln entstanden ist. In den Figuren 3, 4 und 5 ist die Verbindungsnaht 2 als einfache Linie dargestellt. In Figur 2 sieht der Betrachter senkrecht auf die Fläche der Verbindungsnähte 2, die sowohl noch die äußeren Ecken als auch die konturierten Zwickel der Mitte der Packungsreihe hat, weil diese noch nicht abgestanzt sind.

Die Verbindungsnaht 2 umzieht die gesamte Packung und durchzieht daher auch deren Oberwand 3, wenngleich sie dort von der allgemein mit 4 bezeichneten Ausgießvorrichtung unterbrochen ist.

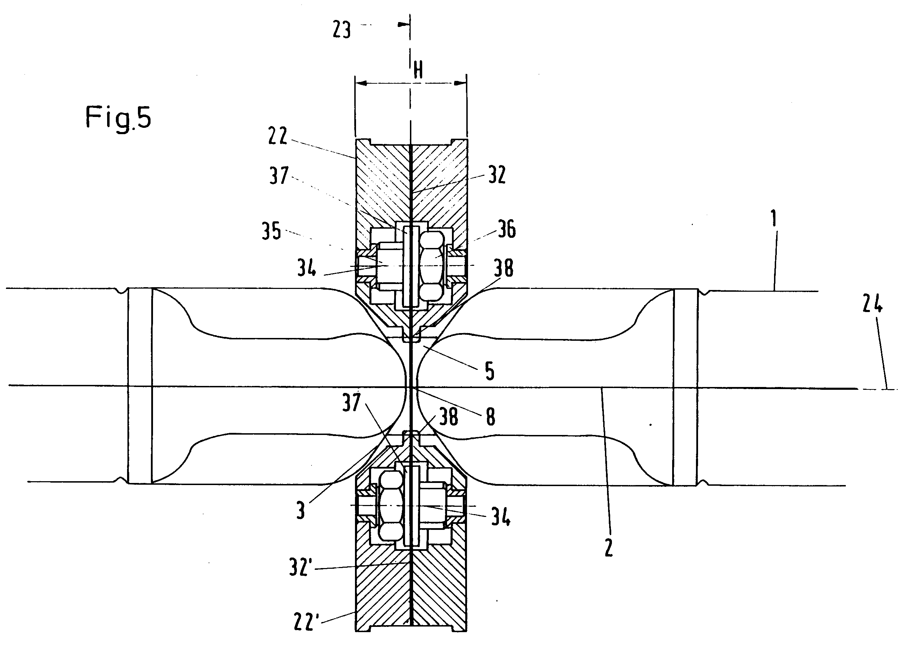

Die Ausgießvorrichtung 4 hat einen von oben kreisförmigen Bund 5, der sich vor dem Versiegeln der Schalenhälften aus zwei halbkreisförmigen Hälften zusammensetzt. Von außen ist der Bund 5 zylindermantelförmig mit abgeflachten Teilen 6 im Bereich der Verbindungsnaht 2. In der schematisierten Darstellung der Figuren 1, 4 und 5 unsichtbar ist das in Figur 2 angedeutete Gewinde 7 außen auf dem jeweiligen Bund 5. Man kann sich dieses leicht aber auch bei den Figuren 1 und 5 vorstellen.

Es ist vorstellbar, daß jede Packung aus zwei Schalenhälften hergestellt und zusammengesetzt ist, die ihrerseits aus plattenförmig ebenen Zuschnitten aus Kunststoffmaterial tiefgezogen sind. Bei leistungsstarken Packungsherstellungsmaschinen wird nicht nur jeweils eine Packungshälfte tiefgezogen, sondern es werden beispielsweise zehn Packungshälften in einem Tiefziehvorgang erstellt. In Draufsicht würde ein solches tiefgezogenes Produkt dann beispielsweise das Aussehen der Figur 2 haben, bei welchem die Halbschalen Kopf an Kopf entlang der Linie 8 miteinander verbunden angebracht sind, eine Linie, die später die Schneidlinie wird. Das Gegenstück zehn entsprechender Halbschalen wird entlang der Flanschnähte, welche später die Verbindungsnähte 2 werden, angesiegelt, so daß sich eine Doppelreihe von fünf hintereinanderliegenden Packungen ergibt, wie in Figur 2 dargestellt ist. Jede der paarweise angeordneten Reihen von fünf Packungen besteht aus einem Stück und ist mit der benachbarten Reihe in der gezeigten Weise verbunden. Figur 2 zeigt also die Draufsicht auf zehn rundum geschlossene Verpackungen. Das Innere jedes Paares von Packungen 1 ist über die aneinanderhängenden Bünde 5 der Ausgießvorrichtung 4 verbunden. Das in Figur 2 dargestellte Teil ist also das Werkstück, in welchem der Trennschnitt entlang der Linie 8 zu legen ist.

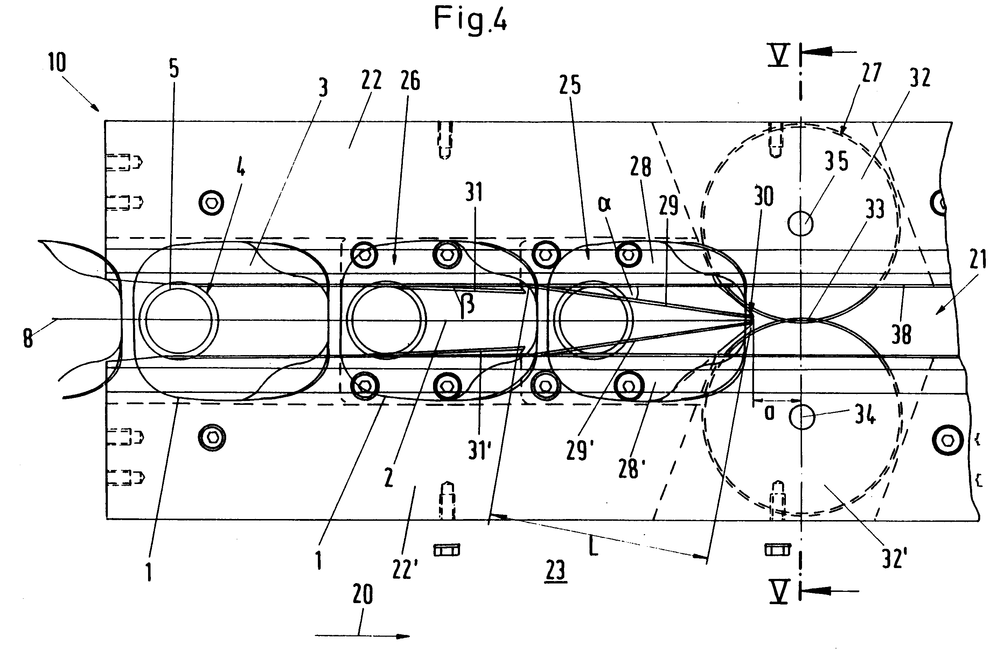

Dieses Werkstück (Packungen 1) bzw. das Gebinde von Packungen 1 wird der in Figur 3 in der oberen Mitte und in Figur 4 vergrößert dargestellten eigentlichen Trennvorrichtung mit Zufördereinrichtungen zugefördert, die anhand Figur 3 beschrieben werden können.

Am Grundrahmen 9 ist die allgemein mit 10 bezeichnete Trennvorrichtung angebracht, die in Wirkeingriff eines in Richtung des Pfeiles 11 oben (Obertrum) umlaufenden Förderbandes 12 steht. Dieses wird vom Motor 13 entgegen Uhrzeigerrichtung um zwei Umlenkräder 14, 14' angetrieben und trägt in Blickrichtung quer zur Förderrichtung L-förmige Mitnehmer 15, die gleichmäßig im Abstand angeordnet und auf das Packungsgebinde abgestimmt sind. Das Gebinde von fünf Paaren von Packungen 1 ist in Figur 3 oben so dargestellt, daß zwischen der in Förderrichtung vordersten, das heißt am weitesten rechts angeordneten Packungen 1 und der zweiten Packung dahinter ein Mitnehmer 15 eingreift, um die Packungen intermittierend nach rechts zu verschieben, denn der Antriebsmotor 13 treibt die sogenannte erste Zufördereinrichtung 12 so an, daß die Reihe der Packungen 1 im Untertrum nach rechts aus der Position I (Figur 1) in die Position II mit der Trennvorrichtung 10 und von dort weiter in die Position III transportiert wird.

Zunächst aber wird angenommen, daß die Reihe von paarweise aneinanderliegenden Packungen, wie sie in Draufsicht in Figur 2 dargestellt sind, auf dem Zuförderer 16 mit seinen Mitnehmern 15 nach rechts in Richtung des Pfeils 17 in die Position IV gebracht wird, wie in Figur 3 in der Mitte unten dargestellt ist. Hier wird das Gebinde von Packungen 1 quer in Blickrichtung auf das Papier der Figur 3 nach hinten (oder vorne) auf Mitnehmer 15a, die sich horizontal zwischen zwei sich vertikal erstreckenden Transportriemen 18, 18' erstrecken, aufgeschoben und vertikal nach oben in Richtung des Pfeiles 19 intermittierend bis in die Position I geschoben, die wiederum in der Mitte der Figur 3 oben mit der Reihe von Packungen 1 dargestellt ist. Zum besseren Verständnis sind ebenso wie bei der Figur 4 die Packungen 1 mit kreisförmigen Bünden 5 an der Oberwand 3 dargestellt, das heißt als wenn man in Richtung der Zylinderachse des Bundes 5 auf den Oberboden 3 der Packung 1 blickt.

Aus der Position I werden die Packungen 1 auf Führungsschienen geschoben, die sich horizontal von der Position I bis über die Position II hinaus erstrecken, oder die Mitnehmer 15a werden als solche Führungsschienen verwendet, denn sie bleiben nach der intermittierenden Bewegung so lange stehen, bis die in Position I befindlichen Packungen 1 in Förderrichtung 20 nach rechts in die Trennvorrichtung 10 (Position II) hinüberbefördert werden. Hier beginnt der Schneidvorgang, wie nachfolgend beschrieben wird. Am abstromseitigen Ende der Trennvorrichtung 10 rechts ist das vorderste Paar der Reihe von Packungen 1 bereits durchtrennt, und wenn bei dem nächsten Hub horizontal nach rechts aus der Position II die Reihe der Packungen in die Position III angekommen ist, sind alle Paare von Packungen 1 gemäß Figur 2 entlang der Schneidlinie 8 durchtrennt, so daß zwei Reihen von je fünf offenen Packungen vorliegen. Von dort, das heißt von der Position III, werden die Packungen dann zu weiteren Verarbeitung mit nicht dargestellten Abfördereinrichtungen weiterbewegt.

Figur 4 veranschaulicht die Trennvorrichtung 10 am deutlichsten. Hier sieht man die allgemein mit 21 bezeichnete, langgestreckte Förderbahn zwischen zwei leistenförmigen Messerführungen 22, 22', die über Winkel 23 (Figur 3) stationär am Grundrahmen 9 angeschraubt sind. Zentral in der Förderbahn 21 liegt die Schnittlinie 8, die in Figur 4 links mit der Bezugszahl 8 versehen ist, welche in der Verbindungsnaht 2 liegt. Senkrecht auf der Papierebene der Figur 4, welche auch die Schneidebene 23 ist (Figur 5) steht die Symmetrieebene 24. Die beiden letztgenannten Ebenen sind in Figur 5 durch gestrichelte Linien angedeutet und schneiden sich in der Schnittlinie 8, welche in Figur 5 der zentrale Kreuzpunkt ist.

Im Bereich der Förderbahn 21 der Werkstücke bzw. Verpackungen 1 sind an jeder der paarweise angeordneten Messerführungen 22, 22' ein erstes Linearmesser 25, in Förderrichtung 20 davor ein zweites Linearmesser 26 und dem ersten Linearmesser 25 nachgeordnet ein Rundmesser 27 angebracht.

Das erste Linearmesser 25 weist ein Paar von Messern 28, 28' auf, die jeweils ein gerade Schneidklinge 29, 29' haben. Diese Messer 28, 28' liegen in der Schneidebene 23 senkrecht zur Symmetrieebene 24, also parallel zu der Papierebene der Figur 4 bzw. parallel zu dieser, und die geraden Schneidklingen 29, 29' sind unter einem Winkel α von 8° gegen die Symmetrieebene 24 angestellt. Von links nach rechts in Förderrichtung 20 der Figur 4 laufen die geraden Schneidklingen 29, 29' unter Annäherung derart aufeinander zu, daß ihre hinteren bzw. abstromseitigen Enden 30 so nahe aneinander liegen, daß dazwischen im wesentlichen nur noch die Verbindungsnaht 2 ohne Schneideingriff in Förderrichtung 20 durchtreten kann.

In Förderrichtung 20 der Packungen 1 ist ein zweites Linearmesser 26 als Vormesser vorgeordnet, dessen gerade Schneidklingen 31, 31' unter einem Winkel β = 3° gegen die Symmetrieebene 24 angestellt sind. Der Winkel β ist halb so groß, wenn nicht noch kleiner, als der Winkel α unter welchem die geraden Schneidklingen 29, 29' des ersten Linearmessers 25 gegen die Symmetrieebene 25 angestellt sind.

In Förderrichtung 20 ist dem ersten Linearmesser 25 das Rundmesser 27 nachgeordnet, welches zwei Kreismesser 32, 32' freidrehend symmetrisch zu der Symmetrieebene 24 aufweist. Sie überlappen sich im Bereich 33, der im Abstand a vom abstromigen Ende 30 des ersten Linearmessers 25 angeordnet ist. Dieser Abstand a ist kleiner als die halbe Länge L der geraden Schneidlinie 29, 29' des ersten Linearmessers 25.

Jedes Kreismesser 32, 32' ist gemäß Darstellung der Figur 5 auf der Achse 34 mit Lagerzapfen 35 in der zweiteiligen Messerführung 22 bzw. 22' gelagert und durch die Mutter 36 über Spannscheibe 37 gehaltert.

Der Durchmesser jedes Kreismessers 32, 32' beträgt etwa 4/5 der Länge L der geraden Klinge 29, 29' des ersten Linearmessers 25.

In Figur 5 sieht man auf die äußere, zylindermantelförmige Oberfläche des Bundes 5 der jeweiligen Packung 1, die Kopf an Kopf hier in horizontaler Richtung nebeneinander so angeordnet sind, daß ihre durch die Flanschsiegelnaht 2 gelegte Ebene in der Symmetrieebene 24 liegt. Jede der aus zwei Teilen aufgebauten leistenförmigen Messerführungen 22, 22' ist in dem der Schnittlinie 8 zugewandten Bereich V-förmig im Querschnitt der Figur 5 ausgestaltet, damit das jeweilige Messer, hier das Kreismesser 32 bzw. 32' bis möglichst nahe an die Schnittlinie 8 geführt ist. Um diese Führung zu optimieren, ist auf der der Symmetrieebene 24 zugewandten Seite jeder Messerführung 22, 22' eine Zentrierleiste 38 angebracht. Man erkennt aus Figur 4, daß sich diese etwa über dieselbe Länge erstreckt wie die jeweilige Messerführung 22 bzw. 22'. Im Vergleich zur Gesamthöhe H der Messerführung 22, 22' ist die nicht näher bezeichnete Höhe der Zentrierleiste 38 wesentlich kleiner in einem Größenverhältnis von etwa 10:1 bis 5:1, vorzugsweise bei der Ausführungsform der Figur 5 6 zu 1.

Im Betrieb wird zunächst die vorderste, in Figur 4 am weitesten rechts gezeigte Packung 1 in die Förderbahn 21 so eingeschoben, daß die schrägen Wangen und die Zentrierleiste 38 der Messerführungen 22 und 22' das Paar Kopf an Kopf einander gegenüberliegender Packungen 1 gleitend führt (mit Position der Figur 5 vergleichbar). Beim Vorbewegen in Förderrichtung 20 erreicht die erste Packung dann die in Figur 4 links innerhalb der Messerführungen 22, 22' gezeigte vollständig dargestellte Position. Der kreisrunde Bund 5 der Ausgießvorrichtung 4 der Packung 1 wird dann innerhalb der Zentrierleisten 38 gehaltert und in die Figur 4 mittlere Position geführt. Dort erfolgt der erste Anriß der geraden Schneidklingen 31, 31' des Vormessers 26. Dessen hintere Enden führen zu einem kleinen Einschnitt durch die zylindermantelförmige Wandung des Bundes 5, in welchen die V-förmig angestellten geraden Messer 29, 29' des ersten Linearmessers 25 eingreifen, um bei weiterer Bewegung in Förderrichtung 20 den Schnitt fortzusetzen und durchzuführen bis zum hinteren Ende 30 dieser letztgenannten Schneidklinge 29, 29'. Hier ist der gesamte Zylindermantel des Bundes 5 durchgeschnitten, und nur die gerade Verbindungsnaht 2 ist noch ohne Eingriff mit Messer geblieben. Die Kreismesser 32, 32' erzeugen den geraden Schnitt entlang der Linie 8 in der Verbindungsnaht 2 und treten in den von den Messern 28, 28' offengehaltenen Schlitz des getrennten Bundes 5 ein, so daß sie von diesem geführt bei weiterer Bewegung der Packung in Förderrichtung 20 den geraden Schnitt durch die Verbindungsnaht 2 hinter dem Bund 5 fortsetzen können. Auf diese Weise wird ein Paar Packungen eins nach dem anderen durchtrennt und nach rechts in Förderrichtung 20 fortgeschoben. Die Bewegung eines Gebindes in Förderrichtung 20 erfolgt bis zum Durchtrennen des letzten Packungspaares. Dann folgt die Ruheposition der intermittierenden Bewegung usw.

### Bezugszeichenliste

- 1: Fließmittelpackung
- 2: Flansch- bzw. Verbindungsnaht
- 3: Oberwand
- 4: Ausgießvorrichtung
- 5: Bund
- 6: abgeflachte Teile
- 7: Gewinde
- 8: Linie
- 9: Grundrahmen
- 10: Trennvorrichtung
- 11: Pfeil
- 12: Förderband
- 13: Motor
- 14, 14': Umlenkräder
- 15, 15a: Mitnehmer
- 16: Zuförderer
- 17: Pfeil
- 18, 18': Transportriemen
- 19: Pfeil
- 20: Förderrichtung
- 21: Förderbahn
- 22, 22': Messerführungen
- 23: Winkel, Schneidebene
- 24: Symmetrieebene
- 25, 26: Linearmesser
- 27: Rundmesser
- 28, 28': Messer
- 29, 29': Schneidklinge
- 30: Enden
- 31, 31': Schneidklingen
- 32, 32': Kreismesser
- 33: Bereich
- 34: Achse
- 35: Lagerzapfen
- 36: Mutter
- 37: Spannscheibe
- 38: Zentrierleiste
- a: Abstand
- H: Gesamthöhe
- I: Position
- II: Position
- III: Position
- IV: Position
- L: Länge

## Patentansprüche

1. Vorrichtung zum mechanischen Trennen von im Trennbereich (8) Kunststoff aufweisenden Werkstücken (1), insbesondere im Kopfbereich paarweise miteinander verbundenen Fließmittelpackungen (1), mit Zu- (12, 16, 18) und Abfördereinrichtungen mit Führungsschienen und Mitnehmern (15, 15a) und mit an der Förderbahn (21) angeordneten Trennmessern (25, 26, 27), dadurch gekennzeichnet, daß in Förderrichtung (20) des Werkstückes (1) einem ersten Linearmesser (25) mit paarweise symmetrisch zu einer Symmetrieebene (24) angeordneten Messern (28, 28') mit jeweils gerader Schneidklinge (29, 29') ein Rundmesser (27) mit paarweise symmetrisch zu der Symmetrieebene (24) angeordneten, drehbaren Kreismessern (32, 32') nachgeschaltet ist, daß sich die Messer (28, 28') mit jeweils gerader Schneidklinge (29, 29') in der senkrecht zur Symmetrieebene (24) liegenden Schneidebene (23) befinden und die geraden Schneidklingen (29, 29') unter einem Winkel (α) gegen die Symmetrieebene (24) so angestellt sind, daß sich die Schneidklingen (29, 29') in Förderrichtung (20) einander derart nähern, daß dazwischen im wesentlichen nur noch das durch das Rundmesser (27) trennbare Kunststoffmaterial ohne Schneideingriff in Förderrichtung durchtreten kann.

2. Vorrichtung nach Anspruch 1, dadurch gekennzeichnet, daß in Förderrichtung (20) des Werkstückes (1) ein zweites Linearmesser (26) als Vormesser vorgeordnet ist, dessen gerade Schneidklingen (31, 31') in einem kleineren Winkel (β) als die geraden Schneidklingen (29, 29') des ersten Linearmessers (25) gegen die Symmetrieebene (24) angestellt sind.

3. Vorrichtung nach Anspruch 2, dadurch gekennzeichnet, daß die geraden Schneidklingen (29, 29') des ersten Linearmessers (25) als Hauptmesser unter einem Winkel (α) von 1° bis 20°, vorzugsweise von 5° bis 15°, gegen die Symmetrieebene (24) angestellt sind und daß die geraden Schneidklingen (31, 31') des zweiten Linearmessers (26) als Vormesser unter einem Winkel β von 0,5° bis 10°, vorzugsweise 1° bis 5°, gegen die Symmetrieebene (24) angestellt sind (Figur 4).

4. Vorrichtung nach Anspruch 2 oder 3, dadurch gekennzeichnet, daß das Linearmesser (25) und das Rundmesser (27) in paarweise bezüglich der Symmetrieebene (24) im Abstand voneinander angebrachten Messerführungen (22, 22') angeordnet sind, wobei vorzugsweise die in Förderrichtung (20) hinteren Enden des zweiten Linearmessers (26) im Bereich der Vorderkanten des ersten Linearmessers (25) liegen, daß die beiden Kreismesser (32, 32') einander in der Schneidebene (23) überlappen und daß der Überlappungsbereich (33) in einem Abstand (a) kleiner als die Länge (L), vorzugsweise die halbe Länge (L) der geraden Schneidklinge (29, 29') des ersten Linearmessers (25) vom abstromseitigen Ende (30) des ersten Linearmessers (25) angeordnet ist.

5. Vorrichtung nach einem der Ansprüche 1 bis 4, dadurch gekennzeichnet, daß die beiden Kreismesser (32, 32') frei drehend und von den Werkstücken (1) antreibbar gelagert und mit rasierklingenartig dünnen, vorzugsweise mit einer Klingendicke von 0,5 bis 2 mm, besonders bevorzugt von 1 bis 1,5 mm, glatten Klingen versehen sind, und daß der Durchmesser jedes Kreismessers (32, 32') etwa ein halb bis 5/6 der Länge (L) der geraden Klinge (29, 29') des ersten Linearmessers (25) beträgt.

6. Vorrichtung nach einem der Ansprüche 1 bis 5, dadurch gekennzeichnet, daß jede Messerführung (22, 22') leistenförmig ausgestaltet ist und auf der der Symmetrieebene (24) zugewandten Seite eine Zentrierleiste (38) geringerer Höhe als die der Messerführung (22, 22') aufweist.

7. Vorrichtung nach einem der Ansprüche 2 bis 6, dadurch gekennzeichnet, daß das zweite Linearmesser (26) gerade Klingen (31, 31') mit Wellenschliff, Zahnkontur oder dergleichen hat.

8. Vorrichtung nach Anspruch 4, dadurch gekennzeichnet, daß jede Messerführung (22, 22') aus zwei etwa deckungsgleich aufeinanderlegbaren Teilen besteht und das Kreismesser (32 bzw. 32') auf der der Symmetrieebene (24) abgewandten Außenseite abdeckt.

9. Vorrichtung nach Anspruch 4 oder 8, dadurch gekennzeichnet, daß die Messerführungen (22, 22') und Messer (25, 26, 27) im Bewegungs- und Wirkbereich einer ersten Zufördereinrichtung (12) angeordnet sind.

## Claims

1. A device for mechanically separating workpieces (1) having plastics material in the separation region (8), in particular fluid packs (1) which are connected together in pairs in the head region, with feed (12, 16, 18) and discharge devices with guide rails and entrainment members (15, 15a) and with separating blades (25, 26, 27) arranged at the conveyor path (21), characterised in that arranged in the conveyor direction (20) of the workpiece (1) downstream of a first linear blade (25) with blades (28, 28') arranged in paired relationship symmetrically with respect to a plane of symmetry (24) and each having a straight cutting edge (29, 29') is a round blade (27) with rotatable circular blades (32, 32') arranged in paired relationship symmetrically with respect to the plane of symmetry (24), that the blades (28, 28') are disposed with their respective straight cutting edge (29, 29') in the cutting plane (23) which is disposed perpendicularly relative to the plane of symmetry (24) and the straight cutting edges (29, 29') are so set at an angle (α) with respect to the plane of symmetry (24) that the cutting edges (29, 29') come closer to each other in the conveyor direction (20) in such a way that essentially only the plastics material which can be separated by the round blade (27) can pass through between the cutting edges (29, 29') in the conveyor direction without cutting engagement.

2. A device according to claim 1 characterised in that arranged at an upstream location in the conveyor direction (20) of the workpiece (1) is a second linear blade (26) as an upstream blade, the straight cutting edges (31, 31') of which are set relative to the plane of symmetry (24) at a smaller angle (β) than the straight cutting edges (29, 29') of the first linear blade (25).

3. A device according to claim 2 characterised in that the straight cutting edges (29, 29') of the first linear blade (25) as the main blade are set at an angle (α) of 1° to 20°, preferably 5° to 15°, relative to the plane of symmetry (24), and that the straight cutting edges (31, 31') of the second linear blade (26) as the upstream blade are set at an angle (β) of 0.5° to 10°, preferably 1° to 5°, relative to the plane of symmetry (24) (Figure 4).

4. A device according to claim 2 or claim 3 characterised in that the linear blade (25) and the round blade (27) are arranged in blade guides (22, 22') which are disposed at a spacing from each other in paired relationship with respect to the plane of symmetry (24), wherein preferably the ends of the second linear blade (26), which are at the rear in the conveyor direction (20), are disposed in the region of the front edges of the first linear blade (25), that the two circular blades (32, 32') mutually overlap in the cutting plane (23), and that the overlap region (33) is arranged at a spacing (a) smaller than the length (L), preferably half the length (L), of the straight cutting edge (29, 29') of the first linear blade (25), from the downstream end (30) of the first linear blade (25).

5. A device according to one of claims 1 to 4 characterised in that the two circular blades (32, 32') are mounted freely rotatingly and drivably by the workpieces (1) and are provided with smooth cutting edges which are razor blade-like thin, preferably with a cutting edge thickness of 0.5 to 2 mm, particularly preferably from 1 to 1.5 mm, and that the diameter of each circular blade (32, 32') is approximately one-half to five-sixths of the length (L) of the straight cutting edge (29, 29') of the first linear blade (25).

6. A device according to one of claims 1 to 5 characterised in that each blade guide (22, 22') is of a bar-like configuration and on the side towards the plane of symmetry (24) has a centering bar (38) of smaller height than the height of the blade guide (22, 22').

7. A device according to one of claims 2 to 6 characterised in that the second linear blade (26) has straight cutting edges (31, 31') with a cylindrically ground contour, a tooth contour or the like.

8. A device according to claim 4 characterised in that each blade guide (22, 22') comprises two portions which can be disposed one upon the other in approximately aligned relationship and covers the circular blade (32 or 32' respectively) on the outward side which is remote from the plane of symmetry (24).

9. A device according to claim 4 or claim 8 characterised in that the blade guides (22, 22') and blades (25, 26, 27) are arranged in the motion and operative region of a first feed device (12).

## Revendications

1. Appareil assurant la séparation mécanique de pièces en oeuvre (1), comportant un matériau plastique dans la zone de séparation (8), en particulier d'emballages pour liquides (1), assemblés par paires l'un à l'autre dans la zone de tête, comportant des dispositifs d'amenée (12, 16, 18) et des dispositifs d'évacuation avec rails de guidage et ergots d'entraînement (15, 15a), ainsi que des couteaux séparateurs (25, 26, 27), disposés contre le trajet de transport (21), caractérisé en ce que, dans la direction (20) du transport de la pièce (1), un couteau rond (27), comportant des couteaux circulaires (32, 32'), pouvant tourner, disposés par paires symétriquement au plan de symétrie (24), est installé en aval d'un premier couteau linéaire (25), comportant des couteaux (28, 28'), disposés par paires symétriquement à un plan de symétrie (24) et comportant chacune une lame de coupe rectiligne (29, 29') ; que les couteaux (28, 28'), comportant chacun une lame de coupe rectiligne (29, 29'), se trouvent dans le plan de coupe (23) disposé perpendiculairement au plan de symétrie (24), et les lames de coupe rectilignes (29, 29') sont disposées en faisant avec le plan de symétrie (24) un angle (α) de telle sorte que les lames de coupe (29, 29') se rapprochent l'une de l'autre, dans la direction du transport (20), de façon qu'essentiellement seul le matériau plastique pouvant être séparé par le couteau rond (27) puisse passer entre elles, dans la direction du transport, sans action de coupe.

2. Appareil selon la revendication 1, caractérisé en ce que, dans la direction du transport (20) de la pièce (1), un deuxième couteau linéaire (26) est disposé en amont, pour servir de couteau préalable, dont les lames de coupe rectilignes (31, 31') font avec le plan de symétrie (24) un angle (β) plus petit que celui des lames de coupe rectilignes (29, 29') du premier couteau linéaire (25).

3. Appareil selon la revendication 2, caractérisé en ce que les lames de coupe rectilignes (29, 29') du premier couteau linéaire (25) servant de couteau principal font avec le plan de symétrie (24) un angle (α) de 1 à 20° et de préférence de 5 à 15°, et que les lames de coupe rectilignes (31, 31') du deuxième couteau linéaire (26), servant de couteau préalable, font avec le plan de symétrie (24) un angle (β) de 0,5 à 10° et de préférence de 1 à 5° (Figure 4).

4. Appareil selon la revendication 2 ou 3, caractérisé en ce que le couteau linéaire (25) et le couteau rond (27) sont disposés dans des guide-couteaux (22, 22'), disposés par paires à une certaine distance l'une de l'autre par rapport au plan de symétrie (24), auquel cas de préférence les extrémités arrière, dans la direction du transport (20), du deuxième couteau linéaire (26) se trouvent dans la zone des arêtes avant du premier couteau linéaire (25) ; que les deux couteaux circulaires (32, 32') se chevauchent l'un l'autre dans le plan de coupe (23) ; et que la zone de chevauchement (33) est disposée à une distance (a) de l'extrémité (30), côté évacuation, du premier couteau linéaire (25), qui est inférieure à la longueur (L) et de préférence inférieure à la moitié de la longueur (L) de la lame de coupe rectiligne (29, 29') du premier couteau linéaire (25).

5. Appareil selon l'une des revendications 1 à 4, caractérisé en ce que les deux couteaux circulaires (32, 32') sont disposés en rotation libre et de façon à pouvoir être entraînés par les pièces (1), et sont pourvus de lames lisses, minces comme une lame de rasoir, ayant de préférence une épaisseur de lame de 0,5 à 2 mm et tout particulièrement de 1 à 1,5 mm, et que le diamètre de chaque couteau circulaire (32, 32') est compris approximativement entre la moitié et les 5/6 de la longueur (L) de la lame rectiligne (29, 29') du premier couteau linéaire (25).

6. Appareil selon l'une des revendications 1 à 5, caractérisé en ce que chaque guide-couteau (22, 22') est configuré en forme de baguette et, sur le côté dirigé vers le plan de symétrie (24), comporte une baguette de centrage (38) ayant une hauteur inférieure à celle du guide-couteau (22, 22').

7. Appareil selon l'une des revendications 2 à 6, caractérisé en ce que le deuxième couteau linéaire (26) a des lames rectilignes (31, 31') à surface ondulée, avec un contour denté ou analogues.

8. Appareil selon la revendication 4, caractérisé en ce que chaque guide-couteau (22, 22') est constitué de deux parties superposables approximativement en recouvrement, et recouvre le couteau circulaire (32 ou 32') sur le côté extérieur opposé au plan de symétrie (24).

9. Appareil selon la revendication 4 ou 8, caractérisé en ce que les guide-couteaux (22, 22') et les couteaux (25, 26, 27) sont disposés dans la zone de déplacement et de manoeuvre d'un premier dispositif d'amenée (12).
